# EUROPEAN PATENT APPLICATION

(11) **EP 4 220 803 A1**
(43) Date of publication of application: **02.08.2023**
(21) Application number: 21921485.5
(22) Date of filing: 20.12.2021
(51) Int. Cl.: H01M 10/0567, H01M 10/42, H01M 10/052

(54) **ELECTROLYTE FOR RECHARGEABLE LITHIUM BATTERY AND RECHARGEABLE LITHIUM BATTERY INCLUDING SAME**

(30) Priority: 22.01.2021 KR 20210009661
(71) Applicant: Samsung SDI Co., Ltd., Yongin-si, Gyeonggi-do 17084 (KR)
(72) Inventor: LEE, Tae Jin, Yongin-si, Gyeonggi-do 17084 (KR); KIM, Minseo, Yongin-si, Gyeonggi-do 17084 (KR); WOO, Myungheui, Yongin-si, Gyeonggi-do 17084 (KR); KIM, Sanghoon, Yongin-si, Gyeonggi-do 17084 (KR); KIM, Dahyun, Yongin-si, Gyeonggi-do 17084 (KR)
(74) Representative: Gulde & Partner
(86) International application number: PCT/KR2021/019360
(87) International publication number: WO 2022/158728

(57) **Abstract**

Provided are an electrolyte for a rechargeable lithium battery and a rechargeable lithium battery including the same, the electrolyte including a nonaqueous organic solvent, a lithium salt, and an additive, wherein the additive is a composition including a first compound represented by Chemical Formula 1 and a second compound represented by Chemical Formula 2, the first compound and the second compound are included in an amount of 0.1 to 10 wt%, respectively. Details of Chemical Formulas 1 and 2 are the same as those described in the specification.

## Description

### [Technical Field]

This disclosure relates to an electrolyte for a rechargeable lithium battery and a rechargeable lithium battery including the same.

### [Background Art]

A rechargeable lithium battery may be recharged and has three or more times as high energy density per unit weight as a conventional lead storage battery, nickel-cadmium battery, nickel hydrogen battery, nickel zinc battery and the like. It may be also charged at a high rate and thus, is commercially manufactured for a laptop, a cell phone, an electric tool, an electric bike, and the like, and researches on improvement of additional energy density have been actively made.

Such a rechargeable lithium battery is manufactured by injecting an electrolyte into a battery cell, which includes a positive electrode including a positive electrode active material capable of intercalating/deintercalating lithium ions and a negative electrode including a negative electrode active material capable of intercalating/deintercalating lithium ions.

Particularly, the electrolyte uses an organic solvent in which a lithium salt is dissolved, and such an electrolyte is important in determining stability and performance of a rechargeable lithium battery.

LiPF₆, which is most commonly used as a lithium salt of the electrolyte, has a problem of accelerating the depletion of the solvent and generating a large amount of gas by reacting with the organic solvent of the electrolyte. When LiPF₆ decomposes, LiF and PFs are produced, which causes electrolyte depletion in the battery, resulting in high-temperature performance degradation and poor safety.

Accordingly, there is a demand for an electrolyte with improved safety without performance deteriorate even at high-temperature condition.

### [Disclosure]

### [Technical Problem]

An embodiment provides an electrolyte for a rechargeable lithium battery having improved thermal stability.

Another embodiment improves a rechargeable lithium battery with improved cycle-life characteristics, high-temperature safety, and high-temperature reliability by applying the electrolyte, and in particular, improved high-temperature storage characteristics and internal short-circuit safety by reducing gas generation and resistance increase rate during high-temperature storage or when exposed to internal short-circuit conditions.

### [Technical Solution]

An embodiment of the present invention provides an electrolyte for a rechargeable lithium battery including a non-aqueous organic solvent, a lithium salt, and an additive, wherein the additive is a composition including a first compound represented by Chemical Formula 1 and a second compound represented by Chemical Formula 2, and the first compound and the second compound are included in an amount of 0.1 to 10 wt%, respectively. 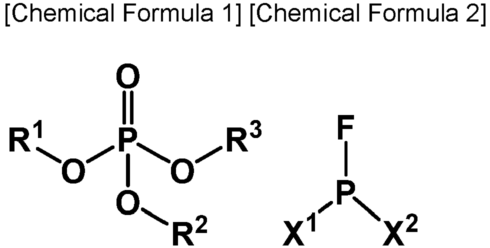 In Chemical Formula 1 and Chemical Formula 2,
R¹ to R³ are each independently a substituted or unsubstituted C1 to C10 alkyl group, a substituted or unsubstituted C2 to C10 alkenyl group, a substituted or unsubstituted C2 to C10 alkynyl group, a substituted or unsubstituted C1 to C10 alkoxy group, a substituted or unsubstituted C3 to C10 cycloalkyl group, a substituted or unsubstituted C3 to C10 cycloalkenyl group, a substituted or unsubstituted C3 to C10 cycloalkynyl group, a substituted or unsubstituted C6 to C20 aryl group, a C1 to C10 alkyl group substituted with one or more fluoro group, a C2 to C10 alkenyl group substituted with one or more fluoro group, a C2 to C10 alkynyl group substituted with one or more fluoro group, a C1 to C10 alkoxy group substituted with one or more fluoro group, a C3 to C10 cycloalkyl group substituted with one or more fluoro group, a C3 to C10 cycloalkenyl group substituted with one or more fluoro group, a C3 to C10 cycloalkynyl group substituted with one or more fluoro group, or a C6 to C20 aryl group substituted with one or more fluoro group,
X¹ and X² are each independently a halogen, or -O-L¹-R⁴, one or more of X¹ and X² is -O-L¹-R⁴,
wherein L¹ is a single bond or a substituted or unsubstituted C1 to C10 alkylene group, and
R⁴s are each independently a cyano group (-CN), a difluorophosphite group (-OPF₂), a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C20 aryl group, and
when X¹ and X² are simultaneously -O-L¹-R⁴,
R⁴s are each independently present, or
two R⁴s are linked to form a substituted or unsubstituted monocyclic or polycyclic aliphatic heterocycle or a substituted or unsubstituted monocyclic or polycyclic aromatic heterocycle.

The composition may include the first compound and the second compound in a weight ratio of 0.01:1 to 100:1.

R¹ to R³ in Chemical Formula 1 may each independently be a substituted or unsubstituted C1 to C10 alkyl group, a substituted or unsubstituted C2 to C10 alkenyl group, a substituted or unsubstituted C2 to C10 alkynyl group, a C1 to C10 alkyl group substituted with one or more fluoro group, a C2 to C10 alkenyl group substituted with one or more fluoro group, or a C2 to C10 alkynyl group substituted with one or more fluoro group.

R¹ to R³ in Chemical Formula 1 may each independently be a substituted or unsubstituted C1 to C5 alkyl group, a substituted or unsubstituted C2 to C5 alkenyl group, a substituted or unsubstituted C2 to C5 alkynyl group, a C1 to C5 alkyl group substituted with one or more fluoro group, a C2 to C5 alkenyl group substituted with one or more fluoro group, or a C2 to C5 alkynyl group substituted with one or more fluoro group.

The first compound may be selected from compounds listed in Group 1.

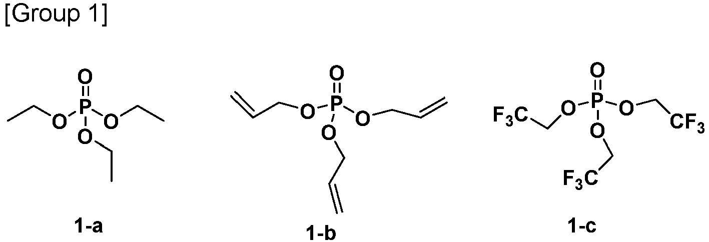

In Chemical Formula 2, one of X¹ and X² may be a fluoro group and the other may be -O-L¹-R⁴, wherein L¹ may be a single bond or a substituted or unsubstituted C1 to C10 alkylene group and R⁴ may be a cyano group (-CN) or a difluorophosphite group (-OPF₂).

The second compound may be represented by Chemical Formula 2 and Chemical Formula 2 may be represented by Chemical Formula 2-1. 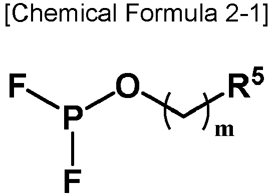 In Chemical Formula 2-1,
m is one of integers from 1 to 5, and
R⁵ is a cyano group (-CN) or a difluorophosphite group (-OPF₂).

The second compound may be represented by Chemical Formula 2,
wherein, in Chemical Formula 2,
X¹ may be -O-L²-R⁶ and X² may be -O-L³-R⁷,
wherein L² and L³ may each independently be a single bond or a substituted or unsubstituted C1 to C10 alkylene group, and
R⁶ and R⁷ may each independently be a substituted or unsubstituted C1 to C10 alkyl group, or R⁶ and R⁷ may be linked to form a substituted or unsubstituted monocyclic aliphatic heterocycle or polycyclic aliphatic heterocycle.

The second compound may be represented by Chemical Formula 2-2. 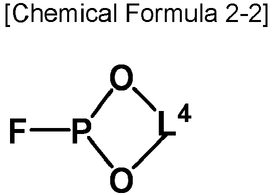 In Chemical Formula 2-2,
L⁴ is a substituted or unsubstituted C2 to C5 alkylene group.

The second compound may be represented by Chemical Formula 2-2, and Chemical Formula 2-2 may be represented by Chemical Formula 2-2a or Chemical Formula 2-2b. 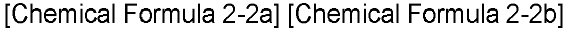 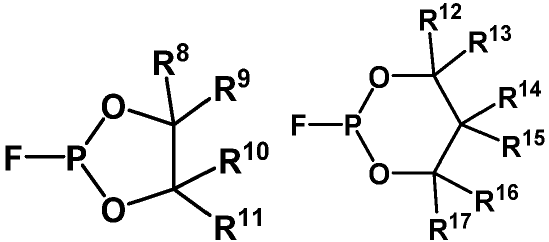 In Chemical Formula 2-2a and Chemical Formula 2-2b,
R⁸ to R¹⁷ are each independently hydrogen, a halogen, or a substituted or unsubstituted C1 to C5 alkyl group.

The second compound may be any one selected from compounds listed in Group 2.

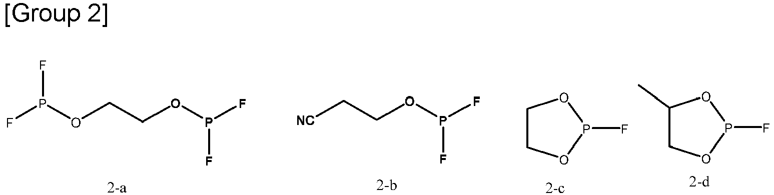

The first compound may be included in an amount of 0.1 to 5.0 wt% based on the total weight of the electrolyte for the rechargeable lithium battery.

The second compound may be included in an amount of 0.1 to 5.0 wt% based on the total weight of the electrolyte for the rechargeable lithium battery.

The composition may be included in an amount of 0.2 to 20 wt% based on the total weight of the electrolyte for the rechargeable lithium battery.

Another embodiment of the present invention provides a rechargeable lithium battery including a positive electrode including a positive electrode active material, a negative electrode including a negative electrode active material, and the aforementioned electrolyte for the rechargeable lithium battery.

### [Advantageous Effects]

Due to the additive with improved thermal safety, it is possible to implement a rechargeable lithium battery having improved high-temperature characteristics and internal short-circuit safety by suppressing an increase in internal resistance and generation of gas after being left at a high temperature, and by suppressing a voltage drop.

### [Description of the Drawings]

FIG. 1 is a schematic view showing a rechargeable lithium battery according to an embodiment of the present invention.
FIG. 2 is a graph showing temperature and voltage changes according to heat exposure at 140 °C for the rechargeable lithium battery cells according to Examples 1 to 6 and Comparative Examples 1 to 6.
FIG. 3 is a graph showing temperature and voltage changes according to heat exposure at 142 °C for the rechargeable lithium battery cells according to Examples 1 to 6 and Comparative Examples 1 to 6.
FIG. 4 is a graph measuring a current interrupt device (CID) operation points when the rechargeable lithium battery cells according to Examples 1 to 6 and Comparative Examples 1 to 6 were left at a high temperature of 90 °C.
FIG. 5 is a graph showing room temperature charge/discharge cycle characteristics of the rechargeable lithium battery cells according to Examples 1 to 6 and Comparative Examples 1 to 6.

### <Description of Symbols>

100: rechargeable lithium battery
112: negative electrode
113: separator
114: positive electrode
120: battery case
140: sealing member

### [Mode for Invention]

Hereinafter, a rechargeable lithium battery according to an embodiment of the present invention will be described in detail with reference to the accompanying drawings. However, these embodiments are exemplary, the present invention is not limited thereto and the present invention is defined by the scope of claims.

In the present specification, unless otherwise defined, "substituted" means that at least one hydrogen in a substituent or compound is deuterium, a halogen group, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In one example of the present invention, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In addition, in specific examples of the present invention, "substituted" refers to replacement of at least on hydrogen of a substituent or a compound by deuterium, a halogen, a C1 to C20 alkyl group, a C6 to C30 aryl group, a C1 to C10 fluoroalkyl group, or a cyano group. In addition, in specific examples of the present invention, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In addition, in specific examples of the present invention, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A rechargeable lithium battery may be classified into a lithium ion battery, a lithium ion polymer battery, and a lithium polymer battery depending on kinds of a separator and an electrolyte. It also may be classified to be cylindrical, prismatic, coin-type, pouch-type, and the like depending on shape. In addition, it may be bulk type and thin film type depending on sizes. Structures and manufacturing methods for lithium ion batteries pertaining to this disclosure are well known in the art.

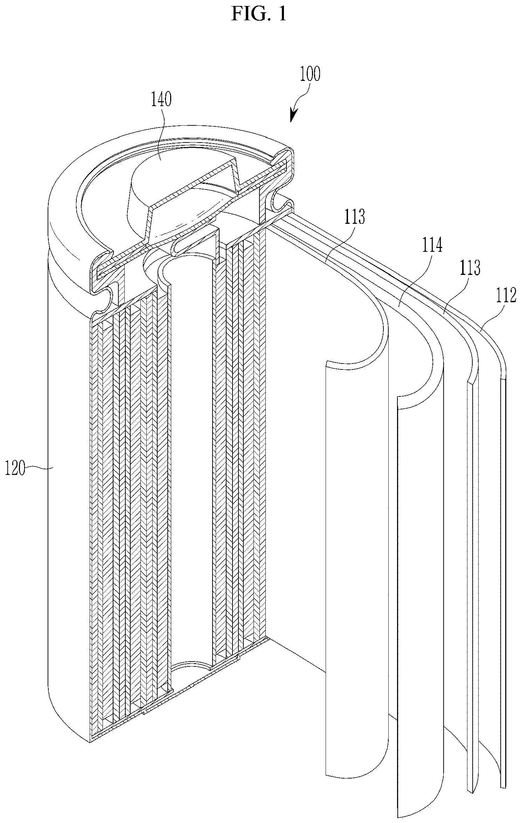

Herein, as an example of a rechargeable lithium battery, a cylindrical rechargeable lithium battery is for example described. FIG. 1 schematically illustrates the structure of a rechargeable lithium battery according to an embodiment. Referring to FIG. 1, a rechargeable lithium battery 100 according to an embodiment includes a battery cell including a positive electrode 114, a negative electrode 112 facing the positive electrode 114, a separator 113 between the positive electrode 114 and the negative electrode 112, and an electrolyte (not shown) impregnating the positive electrode 114, negative electrode 112, and separator 113, a battery case 120 housing the battery cell, and a sealing member 140 sealing the battery case 120.

Hereinafter, a more detailed configuration of the rechargeable lithium battery 100 according to an embodiment of the present invention will be described.

A rechargeable lithium battery according to one embodiment of the present invention includes an electrolyte, a positive electrode, and a negative electrode.

The electrolyte includes a non-aqueous organic solvent, a lithium salt and an additive, wherein the additive is a composition including a first compound represented by Chemical Formula 1 and a second compound represented by Chemical Formula 2, and the first compound and the second compound are included in an amount of 0.1 to 10 wt%, respectively. 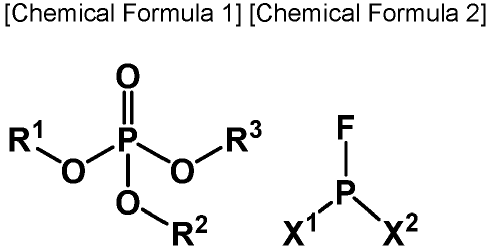 In Chemical Formula 1 and Chemical Formula 2,
R¹ to R³ are each independently a substituted or unsubstituted C1 to C10 alkyl group, a substituted or unsubstituted C2 to C10 alkenyl group, a substituted or unsubstituted C2 to C10 alkynyl group, a substituted or unsubstituted C1 to C10 alkoxy group, a substituted or unsubstituted C3 to C10 cycloalkyl group, a substituted or unsubstituted C3 to C10 cycloalkenyl group, a substituted or unsubstituted C3 to C10 cycloalkynyl group, a substituted or unsubstituted C6 to C20 aryl group, a C1 to C10 alkyl group substituted with one or more fluoro group, a C2 to C10 alkenyl group substituted with one or more fluoro group, a C2 to C10 alkynyl group substituted with one or more fluoro group, a C1 to C10 alkoxy group substituted with one or more fluoro group, a C3 to C10 cycloalkyl group substituted with one or more fluoro group, a C3 to C10 cycloalkenyl group substituted with one or more fluoro group, a C3 to C10 cycloalkynyl group substituted with one or more fluoro group, or a C6 to C20 aryl group substituted with one or more fluoro group,
X¹ and X² are each independently a halogen, or -O-L¹-R⁴, and
one or more of X¹ and X² is -O-L¹-R⁴,
wherein L¹ is a single bond or a substituted or unsubstituted C1 to C10 alkylene group, and
R⁴s are each independently a cyano group (-CN), a difluorophosphite group (-OPF₂), a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C20 aryl group, and
when X¹ and X² are simultaneously -O-L¹-R⁴,
R⁴s are each independently present, or
two R⁴s are linked to form a substituted or unsubstituted monocyclic or polycyclic aliphatic heterocycle or a substituted or unsubstituted monocyclic or polycyclic aromatic heterocycle.

The first compound is a phosphate-based compound and may form a solid carbon film (char) with insulating properties, when the battery is exposed to a high temperature, and suppress a combustion reaction between the electrolyte and gas components on the electrode surface. In addition, the first compound may capture radical products during the combust reaction of the electrolyte or gas components inside the battery and thus terminate radical chain reactions.

In addition, a fluoro phosphite-based compound, which is a second compound, is included with the first compound to control adverse effects of lithium salt decomposition products generated in the electrolyte during high-temperature decomposition as well as flame-retardant characteristics.

In general, when lithium salt anions such as hexafluorophosphate anions are decomposed, by-products such as lithium fluoride (LiF) and phosphorus pentafluoride (PFs), strong Lewis acid, are produced. The lithium fluoride (LiF) increases resistance on the electrode surface, and the phosphorus pentafluoride (PFs) etches and collapses previously-formed stable electrode film components.

However, the second compound is bound with the phosphorus pentafluoride (PFs) and stabilizes it, suppressing strong acidic properties of the phosphorus pentafluoride (PFs). In addition, the second compound captures oxygen gas generated from the collapse of the positive electrode structure, suppressing an electrolyte combust reaction at a high temperature.

In other words, the aforementioned composition includes the first compound represented by Chemical Formula 1 and simultaneously, the second compound represented by Chemical Formula 2 and thus may improve high-temperature safety and flame-retardant characteristics of the battery.

For example, the composition may include the first compound and the second compound in a weight ratio of 0.01:1 to 100:1.

As a specific example, the composition may include the first compound and the second compound in a weight ratio of 0.02 : 1 to 100 : 1, 0.03 : 1 to 100 : 1, 0.04 : 1 to 100 : 1, or 0.05 : 1 to 100: 1.

In another specific example, the composition may include the first compound and the second compound in a weight ratio of 0.01: 1 to 80: 1, 0.01: 1 to 60 : 1, 0.01 : 1 to 40 : 1, or 0.01 : 1 to 20 : 1.

In an embodiment, the composition may include the first compound and the second compound in a weight ratio of 0.01 : 1, 0.05 : 1, 0.1 : 1, 0.2 : 1, 0.3 : 1, 0.4 : 1, 0.5 : 1, 0.6 : 1, 0.7 : 1, 0.8 : 1, 0.9 : 1, 1 : 1, 10 : 1, 20 : 1, 30 : 1, 40 : 1, 50 : 1, or 100: 1.

When the mixing ratio of the first compound and the second compound is as described above, the degree of effect improvement may be maximized.

For example, R¹ to R³ in Chemical Formula 1 may each independently be a substituted or unsubstituted C1 to C10 alkyl group, a substituted or unsubstituted C2 to C10 alkenyl group, a substituted or unsubstituted C2 to C10 alkynyl group, a C1 to C10 alkyl group substituted with one or more fluoro group, a C2 to C10 alkenyl group substituted with one or more fluoro group, or a C2 to C10 alkynyl group substituted with one or more fluoro group.

As a specific example, R¹ to R³ in Chemical Formula 1 may each independently be a substituted or unsubstituted C1 to C5 alkyl group, a substituted or unsubstituted C2 to C5 alkenyl group, a substituted or unsubstituted C2 to C5 alkynyl group, or one or more fluorocarbon group. It may be a C1 to C5 alkyl group substituted with a C2 to C5 alkenyl group substituted with one or more fluoro group, or a C2 to C5 alkynyl group substituted with one or more fluoro group.

For example, the first compound may be selected from compounds listed in Group 1.

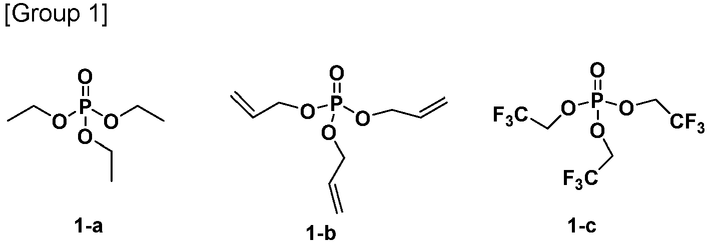

For example, one of X¹ and X² in Chemical Formula 2 may be a fluoro group and the other may be -O-L¹-R⁴,
wherein L¹ may be a single bond or a substituted or unsubstituted C1 to C10 alkylene group, and
R⁴ may be a cyano group (-CN) or a difluorophosphite group (-OPF₂).

As a specific example, the second compound may be represented by Chemical Formula 2 and Chemical Formula 2 may be represented by Chemical Formula 2-1. 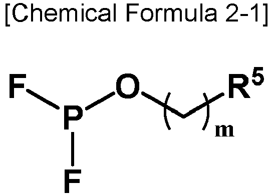 In Chemical Formula 2-1,
m is an integer from 1 to 5,
R⁵ is a cyano group (-CN) or a difluorophosphite group (-OPF₂).

For example, the second compound may be represented by Chemical Formula 2, wherein in Chemical Formula 2, X¹ may be -O-L²-R⁶ and X² may be - O-L³-R⁷, wherein L² and L³ may each independently be a single bond or a substituted or unsubstituted C1 to C10 alkylene group, R⁶ and R⁷ may each independently be a substituted or unsubstituted C1 to C10 alkyl group, and R⁶ and R⁷ may be linked to form a substituted or unsubstituted monocyclic aliphatic heterocycle or polycyclic aliphatic heterocycle.

As a specific example, the second compound may be represented by Chemical Formula 2-2. 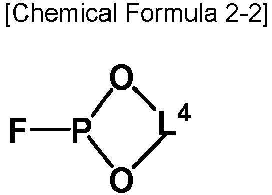 In Chemical Formula 2-2,
L⁴ is a substituted or unsubstituted C2 to C5 alkylene group.

As a more specific example, the second compound may be represented by Chemical Formula 2-2, and Chemical Formula 2-2 may be represented by Chemical Formula 2-2a or Chemical Formula 2-2b. 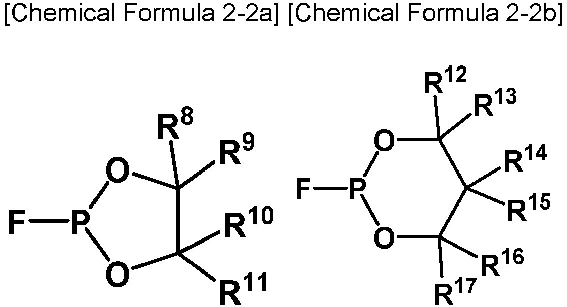 In Chemical Formula 2-2a and Chemical Formula 2-2b,
R⁸ to R¹⁷ are each independently hydrogen, a halogen group, or a substituted or unsubstituted C1 to C5 alkyl group.

For example, the second compound may be any one selected from compounds listed in Group 2.

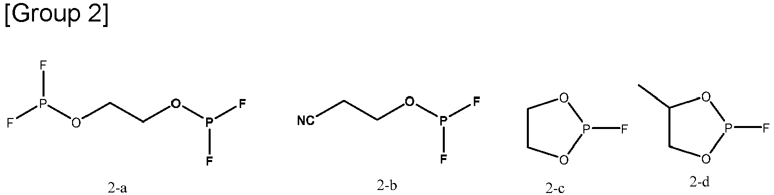

According to the most specific embodiment, the additive included in the electrolyte for the rechargeable lithium battery according to the present invention may be a composition including one or more compounds listed in Group 1 as the first compound and one or more compounds listed in Group 2 as the second compound.

For example, the additive included in the electrolyte for the rechargeable lithium battery according to the present invention may be composition including any one of Compound 1-a, Compound 1-b, and Compound 1-c of Group 1 as a first compound and Compound 2-a or Compound 2-d of Group 2 as a second compound.

In an embodiment, the first compound and the second compound may be included in an amount of 0.1 to 5.0 wt%, respectively.

The composition may be included in an amount of 0.2 to 20 wt% based on the total weight of the electrolyte for the rechargeable lithium battery.

For example, the composition may be included in an amount of 0.2 to 10 wt% based on the total weight of the electrolyte for the rechargeable lithium battery.

When the content of the composition and the content of each component, that is, the first compound and the second compound in the composition, are in the above ranges, battery safety such as thermal stability and internal short circuit safety may be improved, gas generation inside the battery is suppressed and thus, a rechargeable lithium battery having improved battery characteristics at room temperature and high temperature may be implemented.

The non-aqueous organic solvent serves as a medium for transmitting ions taking part in the electrochemical reaction of a battery.

The non-aqueous organic solvent serves as a medium for transmitting ions taking part in the electrochemical reaction of a battery.

The carbonate-based solvent may be dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), butylene carbonate (BC), and the like. The ester-based solvent may be methyl acetate, ethyl acetate, n-propyl acetate, t-butyl acetate, methyl propionate, ethyl propionate, propyl propionate, decanolide, mevalonolactone, caprolactone, and the like. The ether-based solvent may be dibutyl ether, tetraglyme, diglyme, dimethoxyethane, 2-methyltetrahydrofuran, tetrahydrofuran, and the like. In addition, the ketone-based solvent may be cyclohexanone, and the like. The alcohol-based solvent may include ethanol, isopropyl alcohol, and the like, and the aprotic solvent may include nitriles such as R¹⁸-CN (wherein R¹⁸ is a hydrocarbon group having a C2 to C20 linear, branched, or cyclic structure and may include a double bond, an aromatic ring, or an ether bond), and the like, amides such as dimethyl formamide, and the like, dioxolanes such as 1,3-dioxolane, and the like, sulfolanes, and the like.

The non-aqueous organic solvent may be used alone or in a mixture, and when used in a mixture, the mixing ratio may be appropriately adjusted in accordance with a desired battery performance, which is widely understood by those skilled in the art.

The carbonate-based solvent is prepared by mixing a cyclic carbonate and a chain carbonate. When the cyclic carbonate and chain carbonate are mixed together in a volume ratio of 1:9 to 9:1, a performance of the electrolyte may be improved.

In particular, in an embodiment, the non-aqueous organic solvent may include the cyclic carbonate and the chain carbonate in a volume ratio of 2:8 to 5:5, and as a specific example, the cyclic carbonate and the chain carbonate may be included in a volume ratio of 2:8 to 4:6.

More specifically, the cyclic carbonate and the chain carbonate may be included in a volume ratio of 2:8 to 3:7.

The non-aqueous organic solvent may further include an aromatic hydrocarbon-based organic solvent in addition to the carbonate-based solvent. Herein, the carbonate-based solvent and the aromatic hydrocarbon-based organic solvent may be mixed in a volume ratio of 1:1 to 30:1.

The aromatic hydrocarbon-based organic solvent may be an aromatic hydrocarbon-based compound of Chemical Formula 3.

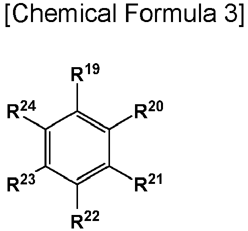

In Chemical Formula 3, R¹⁹ to R²⁴ are the same or different and are hydrogen, a halogen, a C1 to C10 alkyl group, a haloalkyl group, or a combination thereof.

Specific examples of the aromatic hydrocarbon-based organic solvent may be benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

The electrolyte may further include vinylene carbonate, vinyl ethylene carbonate, or an ethylene carbonate-based compound represented by Chemical Formula 4 as an additive to improve cycle-life of a battery.

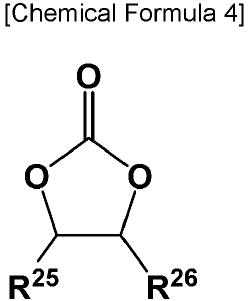

In Chemical Formula 4, R²⁵ and R²⁶ are the same or different, and are selected from hydrogen, a halogen, a cyano group (CN), a nitro group (NO₂), and a fluorinated C1 to C5 alkyl group, provided that one or more of R²⁵ and R²⁶ is selected from a halogen, a cyano group (CN), a nitro group (NO₂), and a fluorinated C1 to C5 alkyl group, and both R²⁵ and R²⁶ are not hydrogen.

Examples of the ethylene carbonate-based compound may include difluoro ethylenecarbonate, chloroethylene carbonate, dichloroethylene carbonate, bromoethylene carbonate, dibromoethylene carbonate, nitroethylene carbonate, cyanoethylene carbonate, or fluoroethylene carbonate. When such an additive for improving cycle-life is further used, its amount may be appropriately adjusted.

The lithium salt dissolved in the non-organic solvent supplies lithium ions in a battery, enables a basic operation of a rechargeable lithium battery, and improves transportation of the lithium ions between positive and negative electrodes. Examples of the lithium salt may include one or more selected from LiPF₆, LiBF₄, LiSbF₆, LiAsF₆, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂) (wherein x and y are natural numbers, for example an integer of 1 to 20), LiCl, Lil, LiB(C₂O₄)₂ (lithium bis(oxalato) borate: LiBOB), LiDFOB (lithium difluoro(oxalato)borate), and Li[PF₂(C₂O₄)₂] (lithium difluoro (bis oxalato) phosphate). The lithium salt may be used in a concentration ranging from 0.1 M to 2.0 M. When the lithium salt is included at the above concentration range, an electrolyte may have excellent performance and lithium ion mobility due to optimal electrolyte conductivity and viscosity.

The positive electrode includes a positive electrode current collector and a positive electrode active material layer on the positive electrode current collector, and the positive electrode active material layer includes a positive electrode active material.
The positive electrode active material may include lithiated intercalation compounds that reversibly intercalate and deintercalate lithium ions.

Specifically, one or more of a composite oxide of a metal selected from cobalt, manganese, nickel, and a combination thereof and lithium may be used.

Of course, one having a coating layer on the surface of the lithium composite oxide may be used, or a mixture of the composite oxide and a compound having a coating layer may be used. The coating layer may include one or more coating element compound selected from an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating process may include any conventional processes as long as it does not cause any side effects on the properties of the positive electrode active material (e.g., inkjet coating, dipping), which is well known to persons having ordinary skill in this art, so a detailed description thereof is omitted.

The positive electrode active material may be, for example, one or more lithium composite oxides represented by Chemical Formula 5.

[Chemical Formula 5] LiₓM¹_{1-y-z}M²_{y}M³_{z}O₂

In Chemical Formula 5,
.5≤x≤1.8, 0≤y<1, 0≤z<1, 0≤y+z<1, and M¹, M², and M³ are each independently any one selected from a metal such as Ni, Co, Mn, Al, Sr, Mg, or La, and a combination thereof.

In an embodiment, M¹ may be a metal such as Co, Mn, Al, Sr, Mg, or La, and M² and M³ may each independently be Ni or Co.

In a specific embodiment, M¹ may be Mn or Al, and M² and M³ may each independently be Ni or Co, but they are not limited thereto.

In a more specific embodiment, the positive electrode active material may be a lithium composite oxide represented by Chemical Formula 5-1 or Chemical Formula 5-2.

[Chemical Formula 5-1] Liₓ₁Ni_{y1}CO_{z1}Al_{1-y1-z1} O2

In Chemical Formula 5-1, 1 ≤x1≤1.2, 0<y1<1, and 0<z1<1.

[Chemical Formula 5-2] Liₓ₂Ni_{y2}Co_{z2}Mn_{1-y2-z2}O₂

In Chemical Formula 5-2,
1≤x2≤1.2, 0<y2<1, and 0<z2<1.

For example, in Chemical Formula 5-1, 1≤x1≤1.2, 0.5≤y1<1, and 0<z1≤0.5.

As a specific example, in Chemical Formula 5-1, 1≤x1≤1.2, 0.6≤y1<1, and 0<z1≤0.5.

As a more specific example, in Chemical Formula 5-1, 1≤x1≤1.2, 0.7≤y1<1, and 0<z1≤0.5.

For example, in Chemical Formula 5-1, 1≤x1≤1.2, 0.8≤y1<1, and 0<z1≤0.5.

For example, in Chemical Formula 5-2, 1≤x2≤1.2, 0.3≤y2<1, and 0.3≤z2<1.

As a specific example, in Chemical Formula 5-2, 1≤x2≤1.2, 0.6≤y2<1, and 0.3≤z2<1.

As a more specific example, in Chemical Formula 5-2, 1 ≤x2≤1.2, 0.7≤y2<1, and 0.3≤z2<1.

For example, in Chemical Formula 5-2, 1 ≤x2≤1.2, 0.8≤y2<1, and 0.3≤z2<1.

A content of the positive electrode active material may be 90 wt% to 98 wt% based on the total weight of the positive electrode active material layer.

In an embodiment of the present invention, the positive electrode active material layer may optionally include a conductive material and a binder. In this case, a content of the conductive material and the binder may be 1 wt% to 5 wt%, respectively, based on the total weight of the positive electrode active material layer.

The conductive material is included to impart conductivity to the positive electrode and any electrically conductive material may be used as a conductive material unless it causes a chemical change in the configured battery. Examples of the conductive material may include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The binder improves binding properties of positive electrode active material particles with one another and with a current collector. Examples thereof may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but is not limited thereto.

The positive electrode current collector may include Al, but is not limited thereto.

The negative electrode includes a negative electrode current collector and a negative electrode active material layer including a negative electrode active material formed on the negative electrode current collector.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions includes carbon materials. The carbon material may be any generally-used carbon-based negative electrode active material in a rechargeable lithium battery and examples of the carbon material include crystalline carbon, amorphous carbon, and a combination thereof. The crystalline carbon may be non-shaped, or sheet, flake, spherical, or fiber shaped natural graphite or artificial graphite and the amorphous carbon may be a soft carbon, a hard carbon, a mesophase pitch carbonization product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, Si-C composite, SiOₓ (0 < x < 2), a Si-Q alloy wherein Q is an element selected from an alkali metal, an alkaline-earth metal, a Group 13 element, a Group 14 element, a Group 15 element, a Group 16 element, a transition metal, a rare earth element, and a combination thereof, but not Si), Sn, SnO₂, a Sn-R²² alloy (wherein R²² is an element selected from an alkali metal, an alkaline-earth metal, a Group 13 element, a Group 14 element, a Group 15 element, a Group 16 element, a transition metal, a rare earth element, and a combination thereof, but not Sn), and the like. One or more of these materials may be mixed with SiO₂.

The elements Q and R²² may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof.

The transition metal oxide may be a vanadium oxide, a lithium vanadium oxide, and the like.

In a specific embodiment, the negative electrode active material may be a Si-C composite including a Si-based active material and a carbon-based active material.

An average particle diameter of the Si-based active material in the Si-C composite may be 50 nm to 200 nm.

When the average particle diameter of the Si-based active material is within the above range, volume expansion occurring during charging and discharging may be suppressed, and a break in a conductive path due to particle crushing during charging and discharging may be prevented.

The Si-based active material may be included in an amount of 1 wt% to 60 wt%, for example, 3 wt% to 60 wt% based on the total weight of the Si-C composite.

In another specific embodiment, the negative electrode active material may further include crystalline carbon together with the aforementioned Si-C composite.

When the negative electrode active material includes a Si-C composite and crystalline carbon together, the Si-C composite and crystalline carbon may be included in the form of a mixture, and in this case, the Si-C composite and crystalline carbon may be included in a weight ratio of 1:99 to 50:50. More specifically, the Si-C composite and crystalline carbon may be included in a weight ratio of 5 : 95 to 20 : 80.

The crystalline carbon may include, for example, graphite, and more specifically, natural graphite, artificial graphite, or a mixture thereof.

An average particle diameter of the crystalline carbon may be 5 µm to 30 µm.

In the present specification, an average particle diameter may be a particle size (D50) at a volume ratio of 50% in a cumulative size-distribution curve.

The Si-C composite may further include a shell surrounding a surface of the Si-C composite, and the shell may include amorphous carbon.

The amorphous carbon may include soft carbon, hard carbon, a mesophase pitch carbonized product, calcined coke, or a mixture thereof.

The amorphous carbon may be included in an amount of 1 to 50 parts by weight, for example, 5 to 50 parts by weight, or 10 to 50 parts by weight based on 100 parts by weight of the carbon-based active material.

In the negative electrode active material layer, the negative electrode active material may be included in an amount of 95 wt% to 99 wt% based on the total weight of the negative electrode active material layer.

In an embodiment, the negative electrode active material layer may include a binder, and optionally a conductive material. The content of the binder in the negative electrode active material layer may be 1 wt% to 5 wt% based on the total weight of the negative electrode active material layer. In addition, when the conductive material is further included, 90 wt% to 98 wt% of the negative electrode active material, 1 wt% to 5 wt% of the binder, and 1 wt% to 5 wt% of the conductive material may be used.

The binder improves binding properties of negative electrode active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be a rubber-based binder or a polymer resin binder. The rubber-based binder may be selected from a styrene-butadiene rubber, an acrylated styrene-butadiene rubber (SBR), an acrylonitrile-butadiene rubber, an acrylic rubber, a butyl rubber, a fluorine rubber, and a combination thereof. The polymer resin binder may be selected from polytetrafluoroethylene, ethylenepropyleneco polymer, polyethylene oxide, polyvinylpyrrolidone, polyepichlorohydrine, polyphosphazene, polyacrylonitrile, polystyrene, an ethylene propylene diene copolymer, polyvinylpyridine, chlorosulfonated polyethylene, latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of 0.1 parts by weight to 3 parts by weight based on 100 parts by weight of the negative electrode active material.

The conductive material is included to improve electrode conductivity and any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene derivative; or a mixture thereof.

The negative electrode current collector may be selected from a copper foil, a nickel foil, a stainless-steel foil, a titanium foil, a nickel foam, a copper foam, a polymer substrate coated with a conductive metal, and a combination thereof.

The rechargeable lithium battery may further include a separator between the negative electrode and the positive electrode, depending on a type of the battery. Such a separator may be a porous substrate or a composite porous substrate.

The porous substrate may be a substrate including pores, and lithium ions may move through the pores. The porous substrate may for example include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The composite porous substrate may have a form including a porous substrate and a functional layer on the porous substrate. The functional layer may be, for example, one or more of a heat-resistant layer and an adhesive layer from the viewpoint of enabling additional function. For example, the heat-resistant layer may include a heat-resistant resin and optionally a filler.

In addition, the adhesive layer may include an adhesive resin and optionally a filler.

The filler may be an organic filler or an inorganic filler.

### DETAILED DESCRIPTION OF THE EMBODIMENTS

Hereinafter, examples of the present invention and comparative examples are described. These examples, however, are not in any sense to be interpreted as limiting the scope of the invention.

### Manufacture of Rechargeable Lithium Battery Cells

### Comparative Example 1

LiNi_{0.88}Co_{0.07}Al_{0.05}O₂ as a positive electrode active material, polyvinylidene fluoride as a binder, and ketjen black as a conductive material were mixed in a weight ratio of 97:2:1 and then, dispersed in N-methyl pyrrolidone, preparing positive electrode active material slurry.

The positive electrode active material slurry was coated on a 14 µm-thick Al foil, dried at 110 °C, and pressed, manufacturing a positive electrode.

A negative electrode active material prepared by mixing artificial graphite and an Si-C composite in a weight ratio of 93:7, a styrene-butadiene rubber binder as a binder, and carboxylmethyl cellulose as a thickener were mixed in a weight ratio of 97:1:2 and then, dispersed in distilled water, preparing negative electrode active material slurry.

The Si-C composite included a core including artificial graphite and silicon particles and coal-based pitch coated on the surface of the core.

The negative electrode active material slurry was coated on a 10 µm-thick Cu and then, dried at 100 °C and pressed, manufacturing a negative electrode.

The positive electrode and the negative electrode were assembled with a 25 µm-thick polyethylene separator to manufacture an electrode assembly, and an electrolyte was injected thereinto, manufacturing a rechargeable lithium battery cell.

The electrolyte had a composition as follows.

### (Composition of Electrolyte)

Salt: 1.5 M LiPF₆
Solvent: ethylene carbonate: ethylmethyl carbonate: dimethyl carbonate (EC: EMC:DMC= a volume ratio of 20:10:70)

### Comparative Example 2

A rechargeable lithium battery cell was manufactured in the same manner as in Comparative Example 1, except that 2.0 wt% of the compound of Chemical Formula 1-a was added to the electrolyte.
(in the composition of the electrolyte, "wt%" is based on the total content of the electrolyte (lithium salt + non-aqueous organic solvent + additive.)

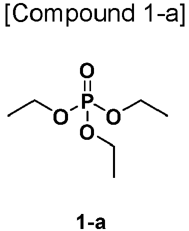

### Comparative Example 3

A rechargeable lithium battery cell was manufactured in the same manner as in Comparative Example 1, except that 2.0 wt% of the compound of Chemical Formula 1-b was added to the electrolyte.

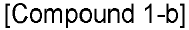

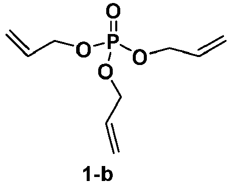

### Comparative Example 4

A rechargeable lithium battery cell was manufactured in the same manner as in Comparative Example 1, except that 2.0 wt% of the compound of Chemical Formula 1-c was added to the electrolyte.

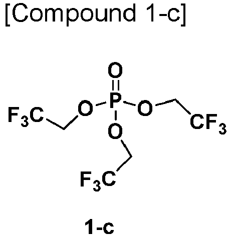

### Comparative Example 5

A rechargeable lithium battery cell was manufactured in the same manner as in Comparative Example 1, except that 2.0 wt% of the compound of Chemical Formula 2-a was added to the electrolyte.

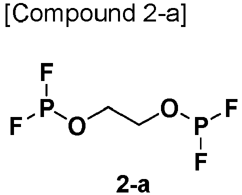

### Comparative Example 6

A rechargeable lithium battery cell was manufactured in the same manner as in Comparative Example 1, except that 2.0 wt% of the compound of Chemical Formula 2-d was added to the electrolyte.

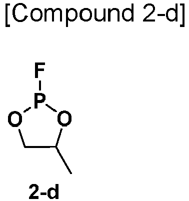

### Examples 1 to 42 and Comparative Examples 7 to 18

Rechargeable lithium battery cells were manufactured in the same manner as in Comparative Example 1, except for changing the composition shown in Table 1.

**(Table 1)**

| | Additive composition | |
|---|---|---|
| | First compound (wt%) | Second compound (wt%) |
| Comparative Example 1 | - | - |
| Comparative Example 2 | Compound 1-a (2.0) | - |
| Comparative Example 3 | Compound 1-b (2.0) | - |
| Comparative Example 4 | Compound 1-c (2.0) | - |
| Comparative Example 5 | - | Compound 2-a (2.0) |
| Comparative Example 6 | - | Compound 2-d 2.0 |
| Example 1 | Compound 1-a (2.0) | Compound 2-a (2.0) |
| Example 2 | Compound 1-b (2.0) | Compound 2-a (2.0) |
| Example 3 | Compound 1-c (2.0) | Compound 2-a (2.0) |
| Example 4 | Compound 1-a (2.0) | Compound 2-d (2.0) |
| Example 5 | Compound 1-b (2.0) | Compound 2-d (2.0) |
| Example 6 | Compound 1-c (2.0) | Compound 2-d (2.0) |
| Example 7 | Compound 1-a (10.0) | Compound 2-a (10.0) |
| Example 8 | Compound 1-b (10.0) | Compound 2-a (10.0) |
| Example 9 | Compound 1-c (10.0) | Compound 2-a (10.0) |
| Example 10 | Compound 1-a (10.0) | Compound 2-d (10.0) |
| Example 11 | Compound 1-b (10.0) | Compound 2-d (10.0) |
| Example 12 | Compound 1-c (10.0) | Compound 2-d (10.0) |
| Example 13 | Compound 1-a (0.1) | Compound 2-a (0.1) |
| Example 14 | Compound 1-b (0.1) | Compound 2-a (0.1) |
| Example 15 | Compound 1-c (0.1) | Compound 2-a (0.1) |
| Example 16 | Compound 1-a (0.1) | Compound 2-d (0.1) |
| Example 17 | Compound 1-b (0.1) | Compound 2-d (0.1) |
| Example 18 | Compound 1-c (0.1) | Compound 2-d (0.1) |
| Example 19 | Compound 1-a (0.1) | Compound 2-a (2.0) |
| Example 20 | Compound 1-b (0.1) | Compound 2-a (2.0) |
| Example 21 | Compound 1-c (0.1) | Compound 2-a (2.0) |
| Example 22 | Compound 1-a (0.1) | Compound 2-d (2.0) |
| Example 23 | Compound 1-b (0.1) | Compound 2-d (2.0) |
| Example 24 | Compound 1-c (0.1) | Compound 2-d (2.0) |
| Example 25 | Compound 1-a (0.1) | Compound 2-a (10) |
| Example 26 | Compound 1-b (0.1) | Compound 2-a (10) |
| Example 27 | Compound 1-c (0.1) | Compound 2-a (10) |
| Example 28 | Compound 1-a (0.1) | Compound 2-d (10) |
| Example 29 | Compound 1-b (0.1) | Compound 2-d (10) |
| Example 30 | Compound 1-c (0.1) | Compound 2-d (10) |
| Example 31 | Compound 1-a (2.0) | Compound 2-a (0.1) |
| Example 32 | Compound 1-b (2.0) | Compound 2-a (0.1) |
| Example 33 | Compound 1-c (2.0) | Compound 2-a (0.1) |
| Example 34 | Compound 1-a (2.0) | Compound 2-d (0.1) |
| Example 35 | Compound 1-b (2.0) | Compound 2-d (0.1) |
| Example 36 | Compound 1-c (2.0) | Compound 2-d (0.1) |
| Example 37 | Compound 1-a (10) | Compound 2-a (0.1) |
| Example 38 | Compound 1-b (10) | Compound 2-a (0.1) |
| Example 39 | Compound 1-c (10) | Compound 2-a (0.1) |
| Example 40 | Compound 1-a (10) | Compound 2-d (0.1) |
| Example 41 | Compound 1-b (10) | Compound 2-d (0.1) |
| Example 42 | Compound 1-c (10) | Compound 2-d (0.1) |
| Comparative Example 7 | Compound 1-a (0.05) | Compound 2-a (0.1) |
| Comparative Example 8 | Compound 1-b (0.05) | Compound 2-a (0.1) |
| Comparative Example 9 | Compound 1-c (0.05) | Compound 2-a (0.1) |
| Comparative Example 10 | Compound 1-a (0.05) | Compound 2-d (0.1) |
| Comparative Example 11 | Compound 1-b (0.05) | Compound 2-d (0.1) |
| Comparative Example 12 | Compound 1-c (0.05) | Compound 2-d (0.1) |
| Comparative Example 13 | Compound 1-a (0.1) | Compound 2-a (0.05) |
| Comparative Example 14 | Compound 1-b (0.1) | Compound 2-a (0.05) |
| Comparative Example 15 | Compound 1-c (0.1) | Compound 2-a (0.05) |
| Comparative Example 16 | Compound 1-a (0.1) | Compound 2-d (0.05) |
| Comparative Example 17 | Compound 1-b (0.1) | Compound 2-d (0.05) |
| Comparative Example 18 | Compound 1-c (0.1) | Compound 2-d (0.05) |

### Evaluation 1: Thermal Exposure Evaluation

The rechargeable lithium battery cells according to Examples 1 to 42 and Comparative Examples 1 to 18 were charged at a charge rate of 0.5 C in a 3.0 V discharge state under a cut-off condition of 4.2 V/3 hr and then, evaluated with respect to thermal exposure.

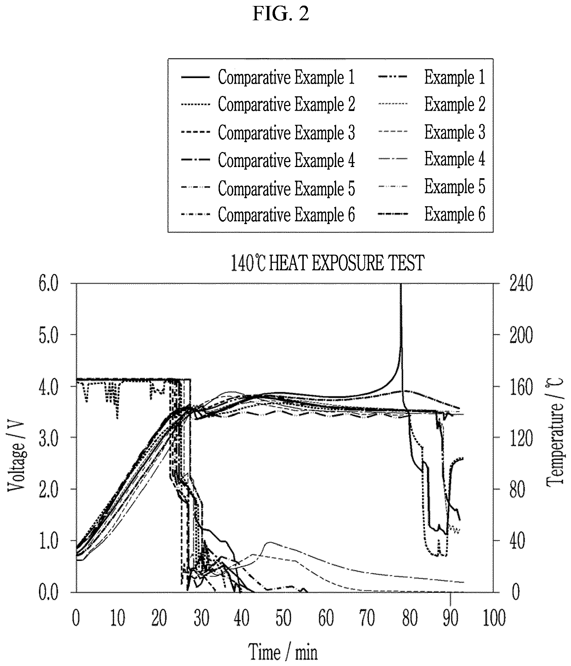

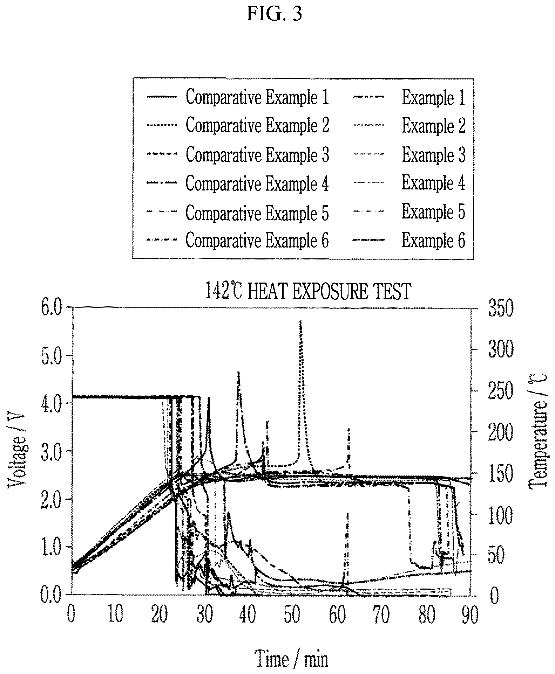

The rechargeable lithium battery cells according to Examples 1 to 42 and Comparative Examples 1 to 18 were put in a chamber and after increasing a temperature from room temperature to 140 °C and 142 °C at 5 °C /min and maintaining the temperature for about 1 hour, examined with respect to a change thereof, and the results are shown in Table 2 and FIGS. 2 and 3. Herein, a dotted line represents a voltage change with time, and a solid line represents a temperature change with time.

In Table 2, when thermal runaway did not occur, while maintaining the temperature, OK was given, and when the thermal runaway sharply occurred during the exposure to a high temperature, NG was given.

**(Table 2)**

| Evaluation temperature (°C) | 140 | 142 |
|---|---|---|
| Comparative Example 1 | NG | NG |
| Comparative Example 2 | OK | NG |
| Comparative Example 3 | OK | NG |
| Comparative Example 4 | OK | NG |
| Comparative Example 5 | OK | NG |
| Comparative Example 6 | OK | NG |
| Example 1 | OK | OK |
| Example 2 | OK | OK |
| Example 3 | OK | OK |
| Example 4 | OK | OK |
| Example 5 | OK | OK |
| Example 6 | OK | OK |
| Example 7 | OK | OK |
| Example 8 | OK | OK |
| Example 9 | OK | OK |
| Example 10 | OK | OK |
| Example 11 | OK | OK |
| Example 12 | OK | OK |
| Example 13 | OK | OK |
| Example 14 | OK | OK |
| Example 15 | OK | OK |
| Example 16 | OK | OK |
| Example 17 | OK | OK |
| Example 18 | OK | OK |
| Example 19 | OK | OK |
| Example 20 | OK | OK |
| Example 21 | OK | OK |
| Example 22 | OK | OK |
| Example 23 | OK | OK |
| Example 24 | OK | OK |
| Example 25 | OK | OK |
| Example 26 | OK | OK |
| Example 27 | OK | OK |
| Example 28 | OK | OK |
| Example 29 | OK | OK |
| Example 30 | OK | OK |
| Example 31 | OK | OK |
| Example 32 | OK | OK |
| Example 33 | OK | OK |
| Example 34 | OK | OK |
| Example 35 | OK | OK |
| Example 36 | OK | OK |
| Example 37 | OK | OK |
| Example 38 | OK | OK |
| Example 39 | OK | OK |
| Example 40 | OK | OK |
| Example 41 | OK | OK |
| Example 42 | OK | OK |
| Comparative Example 7 | NG | NG |
| Comparative Example 8 | NG | NG |
| Comparative Example 9 | NG | NG |
| Comparative Example 10 | NG | NG |
| Comparative Example 11 | NG | NG |
| Comparative Example 12 | NG | NG |
| Comparative Example 13 | NG | NG |
| Comparative Example 14 | NG | NG |
| Comparative Example 15 | NG | NG |
| Comparative Example 16 | NG | NG |
| Comparative Example 17 | NG | NG |
| Comparative Example 18 | NG | NG |

Referring to Table 2, the rechargeable lithium battery cells according to Examples 1 to 42 exhibited no thermal runaway, while maintaining a temperature during the exposure at a high temperature. On the contrary, the rechargeable lithium battery cells according to Comparative Examples 1 to 18 exhibited sharp thermal runaway. In particular, the rechargeable lithium battery cells according to Comparative Examples 2 to 6 exhibited no thermal runaway during the thermal exposure at 140 °C, but the thermal runaway was eventually observed during the exposure at 142 °C.

Particularly, in FIGS. 2 and 3, temperature and voltage change profiles of some examples and comparative examples are shown.

FIG. 2 is a graph showing temperature and voltage changes according to heat exposure at 140 °C for the rechargeable lithium battery cells according to Examples 1 to 6 and Comparative Examples 1 to 6.

FIG. 3 is a graph showing temperature and voltage changes according to heat exposure at 142 °C for the rechargeable lithium battery cells according to Examples 1 to 6 and Comparative Examples 1 to 6.

Referring to FIGS. 2 and 3, voltage drops were observed in the rechargeable lithium battery cells according to Examples 1 to 6 and Comparative Examples 1 to 6. When cylindrical batteries were rapidly exposed to a high temperature, gas was generated therefrom and thus increased an internal resistance, which operated a battery protective circuit (CID), causing sharp voltage drops. The sharp voltage drops indicate that in the rechargeable lithium battery cells according to Examples 1 to 6 and Comparative Examples 1 to 6, a protective circuit was operated due to gas generation during the exposure to a high temperature.

However, the rechargeable lithium battery cells according to Examples 1 to 6, even though exposed to a temperature of 140 °C, exhibited no thermal runaway, while maintaining the temperature of 140 °C, but when the rechargeable lithium battery cell according to Comparative Example 1 was exposed to the temperature of 140 °C, the temperature seemed to be maintained at 140 °C, but the rechargeable lithium battery cell according to Comparative Example 1 exhibited sharp thermal runaway to greater than or equal to 240 °C (at 78 minutes).

When exposed to a 142 °C by slightly increasing the temperature, the rechargeable lithium battery cells according to Comparative Examples 2 to 6 as well as Comparative Example 1 exhibited thermal runaway to 200 °C or higher. Accordingly, the rechargeable lithium battery cells according to Comparative Examples 1 to 6 did not only generate gas but also exhibited thermal runaway and thus exploded.

Accordingly, the rechargeable lithium battery cells according to Examples 1 to 42 exhibited high thermal stability, compared to the rechargeable lithium battery cells according to Comparative Examples 1 to 18.

### Evaluation 2: Evaluation of High-temperature Leaving Characteristics

The rechargeable lithium battery cells according to Examples 1 to 6 and Comparative Examples 1 to 6 were charged at 4.35 V in a CC/CV mode at a charge and discharge rate of 0.5 C for 3 hours and allowed to stand in a chamber at 90 °C for 110 hours to measure a CID (Current Interrupt Device) operation point.

The CID (Current Interrupt Device) is an element detecting a pressure change, that is, a pressure increase in a closed and sealed device and cutting off a current at a predetermined pressure or higher, which is obvious to those skilled in the art and will not be described in detail.

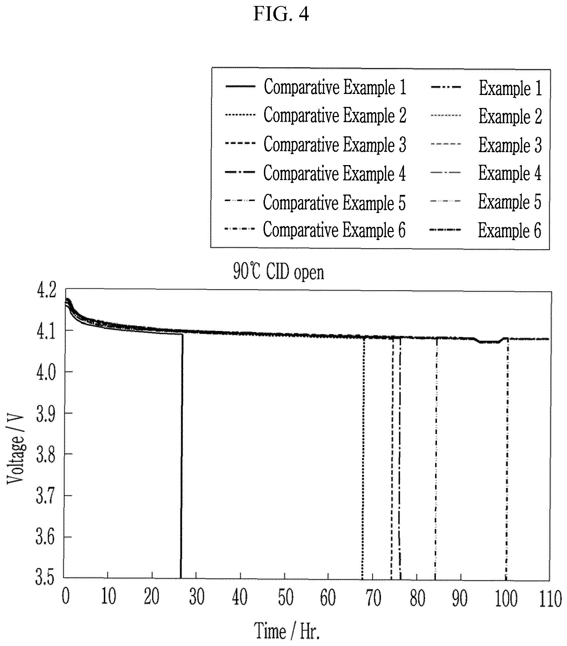

The CID operation point was measured to evaluate high-temperature leaving characteristics of the rechargeable lithium battery cells, and the results are shown in FIG. 4.

FIG. 4 is a graph measuring a current interrupt device (CID) operation points of the rechargeable lithium battery cells according to Examples 1 to 6 and Comparative Examples 1 to 6.

The CID operation points were measured to evaluate high-temperature storage characteristics of the rechargeable lithium battery cells.

Referring to FIG. 4, Comparative Examples 1 to 6 exhibited a sharp voltage drop before about 100 hours during the high-temperature storage at 90 °C, but Examples 1 to 6 including an additive according to an example embodiment of the present invention exhibited no voltage drop at least to 110 hours, which postponed decomposition of the electrolyte and reduced resistance increase and thus had an effect of delaying the OCV drop. In other words, the rechargeable lithium battery cells according to the present invention had an excellent effect of suppressing gas generation during the high-temperature storage.

### Evaluation 2: Evaluation of Room-temperature Cycle-life Characteristics

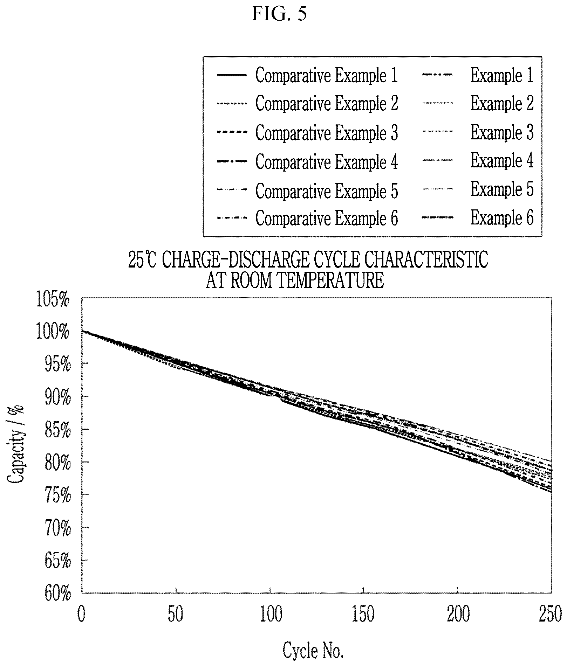

The rechargeable lithium battery cells according to Examples 1 to 6 and Comparative Examples 1 to 6 were measured with respect to a change of discharge capacity, while 250 cycles charged and discharged within 2.5 V to 4.2 V at a C-rate of 0.5 C at room temperature (25 °C) to calculate a ratio of discharge capacity at the 250^{th} cycle to discharge capacity at the 1^{st} cycle (capacity retention), and the results are shown in FIG. 5.

FIG. 5 is a graph showing room temperature charge/discharge cycle characteristics of the rechargeable lithium battery cells according to Examples 1 to 6 and Comparative Examples 1 to 6.

Referring to FIG. 5, Examples 1 to 6 exhibited not much deteriorated cycle-life, compared to Comparative Examples 1 to 6.

Therefore, the rechargeable lithium battery cells including the composition of the specific mixed combination according to the present embodiment as an additive showed remarkably improved thermal stability without reducing a cycle-life.
Although the preferred embodiments of the present invention have been described above, the present invention is not limited thereto, and it is possible to carry out various modifications within the scope of the claims and the detailed description of the invention and the accompanying drawings, and these may also fall within the scope of the invention.

## Claims

1. An electrolyte for a rechargeable lithium battery, comprising
a non-aqueous organic solvent,
a lithium salt, and
an additive,
wherein the additive is a composition including a first compound represented by Chemical Formula 1 and a second compound represented by Chemical Formula 2, and
the first compound and the second compound are included in an amount of 0.1 to 10 wt%, respectively: 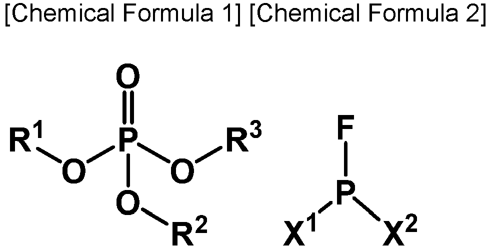
wherein, in Chemical Formula 1 and Chemical Formula 2,
R¹ to R³ are each independently a substituted or unsubstituted C1 to C10 alkyl group, a substituted or unsubstituted C2 to C10 alkenyl group, a substituted or unsubstituted C2 to C10 alkynyl group, a substituted or unsubstituted C1 to C10 alkoxy group, a substituted or unsubstituted C3 to C10 cycloalkyl group, a substituted or unsubstituted C3 to C10 cycloalkenyl group, a substituted or unsubstituted C3 to C10 cycloalkynyl group, a substituted or unsubstituted C6 to C20 aryl group, a C1 to C10 alkyl group substituted with one or more fluoro group, a C2 to C10 alkenyl group substituted with one or more fluoro group, a C2 to C10 alkynyl group substituted with one or more fluoro group, a C1 to C10 alkoxy group substituted with one or more fluoro group, a C3 to C10 cycloalkyl group substituted with one or more fluoro group, a C3 to C10 cycloalkenyl group substituted with one or more fluoro group, a C3 to C10 cycloalkynyl group substituted with one or more fluoro group, or a C6 to C20 aryl group substituted with one or more fluoro group,
X¹ and X² are each independently a halogen, or -O-L¹-R⁴,
one or more of X¹ and X² is -O-L¹-R⁴,
wherein L¹ is a single bond or a substituted or unsubstituted C1 to C10 alkylene group, and
R⁴s are each independently a cyano group (-CN), a difluorophosphite group (-OPF₂), a substituted or unsubstituted C1 to C10 alkyl group, a substituted or unsubstituted C2 to C10 alkenyl group, a substituted or unsubstituted C2 to C10 alkynyl group, a substituted or unsubstituted C3 to C10 cycloalkyl group, a substituted or unsubstituted C3 to C10 cycloalkenyl group, a substituted or unsubstituted C3 to C10 cycloalkynyl group, or a substituted or unsubstituted C6 to C20 aryl group, and
when X¹ and X² are simultaneously -O-L¹-R⁴,
R⁴s are each independently present, or
two R⁴s are linked to form a substituted or unsubstituted monocyclic or polycyclic aliphatic heterocycle or a substituted or unsubstituted monocyclic or polycyclic aromatic heterocycle.

2. The electrolyte for the rechargeable lithium battery of claim 1, wherein
the composition includes the first compound and the second compound in a weight ratio of 0.01:1 to 100:1.

3. The electrolyte for the rechargeable lithium battery of claim 1, wherein
R¹ to R³ in Chemical Formula 1 are each independently a substituted or unsubstituted C1 to C10 alkyl group, a substituted or unsubstituted C2 to C10 alkenyl group, a substituted or unsubstituted C2 to C10 alkynyl group, a C1 to C10 alkyl group substituted with one or more fluoro group, a C2 to C10 alkenyl group substituted with one or more fluoro group, or a C2 to C10 alkynyl group substituted with one or more fluoro group.

4. The electrolyte for the rechargeable lithium battery of claim 1, wherein
R¹ to R³ in Chemical Formula 1 are each independently a substituted or unsubstituted C1 to C5 alkyl group, a substituted or unsubstituted C2 to C5 alkenyl group, a substituted or unsubstituted C2 to C5 alkynyl group, a C1 to C5 alkyl group substituted with one or more fluoro group, a C2 to C5 alkenyl group substituted with one or more fluoro group, or a C2 to C5 alkynyl group substituted with one or more fluoro group.

5. The electrolyte for the rechargeable lithium battery of claim 1, wherein
the first compound is selected from compounds listed in Group 1:

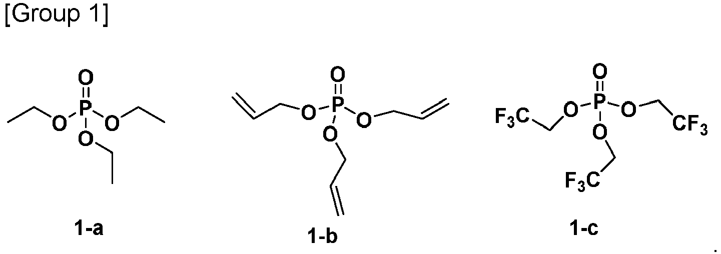

6. The electrolyte for the rechargeable lithium battery of claim 1, wherein
one of X¹ and X² in Chemical Formula 2 is a fluoro group and the other is -O-L¹-R⁴,
wherein L¹ is a single bond or a substituted or unsubstituted C1 to C10 alkylene group, and
R⁴ is a cyano group (-CN) or a difluorophosphite group (-OPF₂).

7. The electrolyte for the rechargeable lithium battery of claim 6, wherein
the second compound is represented by Chemical Formula 2, and
Chemical Formula 2 is represented by Chemical Formula 2-1: 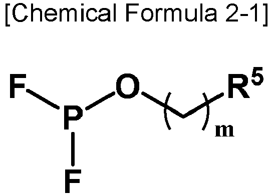
wherein, in Chemical Formula 2-1,
m is an integer from 1 to 5, and
R⁵ is a cyano group (-CN) or a difluorophosphite group (-OPF₂).

8. The electrolyte for the rechargeable lithium battery of claim 1, wherein
the second compound is represented by Chemical Formula 2,
in Chemical Formula 2,
X¹ is -O-L²-R⁶ and X² is -O-L³-R⁷,
wherein L² and L³ are each independently a single bond or a substituted or unsubstituted C1 to C10 alkylene group, and
R⁶ and R⁷ are each independently a substituted or unsubstituted C1 to C10 alkyl group, or R⁶ and R⁷ are linked to form a substituted or unsubstituted monocyclic aliphatic heterocycle or polycyclic aliphatic heterocycle.

9. The electrolyte for the rechargeable lithium battery of claim 8, wherein
the second compound is represented by Chemical Formula 2-2: 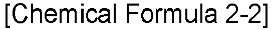 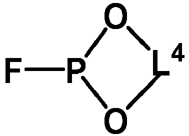
wherein, in Chemical Formula 2-2,
L⁴ is a substituted or unsubstituted C2 to C5 alkylene group.

10. The electrolyte for the rechargeable lithium battery of claim 9, wherein
the second compound is represented by Chemical Formula 2-2, and Chemical Formula 2-2 is represented by Chemical Formula 2-2a or Chemical Formula 2-2b: 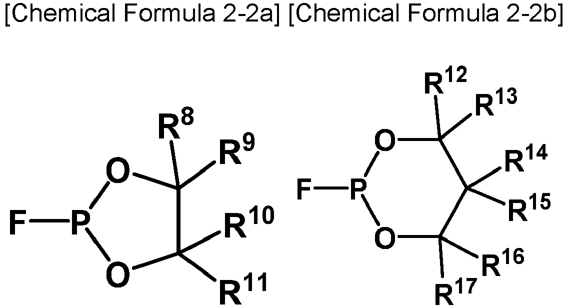
wherein, in Chemical Formula 2-2a and Chemical Formula 2-2b,
R⁸ to R¹⁷ are each independently hydrogen, a halogen group, or a substituted or unsubstituted C1 to C5 alkyl group.

11. The electrolyte for the rechargeable lithium battery of claim 1, wherein
the second compound is any one selected from compounds listed in Group 2:

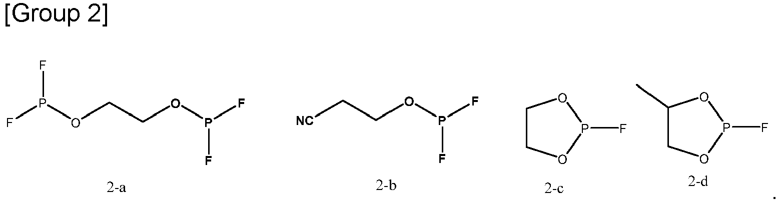

12. The electrolyte for the rechargeable lithium battery of claim 1, wherein
the first compound is included in an amount of 0.1 to 5.0 wt% based on the total weight of the electrolyte for the rechargeable lithium battery.

13. The electrolyte for the rechargeable lithium battery of claim 1, wherein
the second compound is included in an amount of 0.1 to 5.0 wt% based on the total weight of the electrolyte for the rechargeable lithium battery.

14. The electrolyte for the rechargeable lithium battery of claim 1, wherein
the composition is included in an amount of 0.2 to 20 wt% based on the total weight of the electrolyte for the rechargeable lithium battery.

15. A rechargeable lithium battery, comprising
a positive electrode including a positive electrode active material;
a negative electrode including a negative electrode active material; and
the electrolyte for the rechargeable lithium battery of any one of claim 1 to claim 14.
